Europäisches Patentamt

European Patent Office

Office européen des brevets

(11) Publication number : **0 448 220 A1**

(12) # EUROPEAN PATENT APPLICATION

(21) Application number : **91301227.4**

(51) Int. Cl.⁵ : **A01N 63/00**

(22) Date of filing : **15.02.91**

(30) Priority : **16.02.90 GB 9003546**

(43) Date of publication of application :
**25.09.91 Bulletin 91/39**

(84) Designated Contracting States :
**BE CH DE ES FR GB GR IT LI NL**

(71) Applicant : **FABRIQUES DE TABAC REUNIES S.A.**
**Quai Jeanrenaud 3 P.O. Box 11**
**CH-2003 Neuchâtel-Serrières (CH)**

(72) Inventor : **Hofer, Michel**
**Sous-le-Village 13**
**CH-2208 Les Hauts-Geneveys (CH)**

(74) Representative : **Marlow, Nicholas Simon et al**
**Reddie & Grose 16, Theobalds Road**
**London WC1X 8PL (GB)**

(54) **Control of cigarette beetles.**

(57)  A method of controlling the population of cigarette beetles on dried tobacco is disclosed, in which the tobacco is treated with Bacillus thuringiensis var. tenebrionis, in the spore state.

Jouve, 18, rue Saint-Denis, 75001 PARIS

# CONTROL OF CIGARETTE BEETLES

This invention relates to the control of the population of cigarette beetles, Lasioderma serricorne, in dried tobacco, including tobacco derivatives such as reconstituted tobacco, and other dry materials.

The cigarette beetle is one of the most widespread pests affecting stored tobacco. Many methods of controlling cigarette beetle populations in tobacco have been tried, including so-called biological methods such as the use of beetle pheromones, insect growth regulators and bacteriological control. This latter technique has not been successful, since no bacterium has been identified which is pathogenic to the cigarette beetle, and in particular to the beetle larva.

US 4 766 203 and US 4 851 340 discloses the use of Bacillus thuringiensis var. tenebrionis (Btt) as an insecticide active selectively against certain members of the order Coleoptera, beetles, namely the Chrysomelides blue alder leaf beetle (Agelastica aliu) and Colorado beetle (Leptionotarsa decemlineato). These documents are only concerned with the treatment of standing crops, and with the control of pests attacking growing crops.

It has now been surprisingly found that Bacillus thuringiensis var tenebrionis is pathogenic to the cigarette beetle (Lasioderma serricorne), in relatively dry environments such as that present in dried tobacco.

Bacillus thuringiensis var. tenebrionis is freely available from the Deutsche Sammlung von Microorganismen, Grisebachstrasse 8, D-3400 Gottingen, Germany, where it has been deposited under the number DSM 2803.

According to the present invention there is provided a method of controlling the population of Lasioderma serricorne on dried tobacco or other dry material comprising treating the material with Bacillus thuringiensis var. tenebrionis.

The invention also encompasses tobacco treated by a method of the invention.

Tobacco may be stored for 3 years or more after harvesting and drying. Dried tobacco has a water content of about 10% or 11% by weight.

The invention will now be further described by the following trials.

## METHODOLOGY

### 1. Lasioderma rearing

Lasioderma collected from a cut filler infested were reared on a flour medium. Newly emerged adults of the second generation were collected and introduced into jars for egg production. Eggs for the trials were produced on muslin impregnated with ethanol extract of flue-cured tobacco. Eggs were collected after 5 to 7 days from mason jars fitted with 40-mesh metal screen in 90 mm diameter glass petri dishes. The eggs were counted and distributed in petri dishes corresponding to the different versions with an Artek automatic counter calibrated at 0. 2 mm to provide size discrimination. Larvae were collected after 7 to 15 days incubation of eggs by sieving the flour medium.

### 2. B.T. tenebrionis preparation

#### a) Cultivation and sporulation

The Btt strain was tested on different liquid media for its ability to grow and to sporulate. Only the spores and the para-sporal crystals of Btt strain insecticidal properties. The objective was to determine the best medium to obtain the highest spore yield in the shortest time., The lysis was controlled every day with the microscope. On the specific medium (Proom & Knight's medium) for the Bacillus (gen. Microbioly, 4, 508-538, 1950), the strain showed a good growing rate but a poor sporulation ( only 5% after 7 days of incubation at 30°C ). In the medium recommended by Krieg et al. ( Z Agnew. Entomol. 96 500-508, 1983 ), 95% of the bacterial cells were sporulated after 72 hours of incubation. Best results were obtained on the usual medium used at Institute Pasteur with a sporulation yield of 99% after 48 hours. The composition and the preparation of this medium are shown below.

## USUAL SPORULATION MEDIUM OF THE INSTITUTE PASTEUR

### Stock solutions

Solution 1 :     2 M aqueous solution of $PO_4H_2K$ (68 g/l)
Solution 2 :     $SO_4Mg \cdot 7H_2O$ 12,3 g
                 $SO_4Mn \cdot 4H_2O$ 0,223 g
                 $SO_4Zn \cdot 7H_2O$ 1.4 g
                 dissolve in one litre
Solution 3 :     $(SO_4)_3Fe_2$ 2 g
                 $SO_4H_2$ (N) 100 ml
                 dissolved and made up to one litre
Solution 4 :     $Cl_2Ca \cdot 4H_2O$ 18,3 g
                 dissolved in one litre liter

### Preparation

i Mix :     100 ml of solution 1
            10 ml of solution 2
            10 ml of solution 3
            10 ml of solution 4
ii          Adjust to one litre
iii         Add 7,5 g of peptone
            Adjust the pH to 7.5 with NaOH
iv          Autoclave 20 min. at 120°C
v           Add 1% of a sterile glucose solution

### b) Spore/Crystal preparation

Btt cells were grown on the Institute Pasteur medium until lysis occurred. Spore/crystal preparations were made by centrifugation at 10000 x g of the growth medium containing lysed cells followed by washing three times with water. Spores and crystals were concentrated ten times during the last washing step. The suspension was refrigerated quickly at - 50°C in an alcohol bath, and lyophilized during 48 hours under at 30 millitorr.

## BIO-ASSAYS ON TOBACCO

A flue-cured tobacco lot from US, crop year 1985, grade BAF, was selected for the preliminary trial in vivo. The tobacco was cut and sterilized by gamma irradiation (dose 30 kGy) to avoid undesirable insects and to exterminate the natural microflora of the tobacco.

## TRIAL

Dilutions of spore/crystal lyophilisate were sprayed on 100g sterile tobacco. Three versions were prepared with 1.0, 0.1 and 0.01 mg lyophilisate of tobacco. Each of the three 100 g versions as well as a control (sprayed with water) were inoculated with 300 Lasioderma eggs and incubated in the insectary, at 27°C ± 1 deg C and 70 ± 2% relative humidity.

## RESULTS

### Characterization of lyophilizate

The trials were standardized on the lyophilizate weight basis. 1200 ml of Institute Pasteur medium were inoculated with Btt. After 48 hours incubation the medium was centrifuged, washed three times and lyophilised. These operations were repeated five times and each to about 1g of lyophilizate was collected. The lyophilizates were analysed for their spore content. An average of $1.5 \times 10^8$ spores was found per mg of lyophilizate.

All the tobacco samples were analysed for their spore content one day after Bacillus thuringiensis var. tenebrionis application as well as after one, two and three months. The spore population remained very stable over time, at the applied concentration (Table 1). The insecticidal activity of Btt against the cigarette beetle under practical conditions of the tobacco gives approximately the same results as those observed on the flour media.

## Table 1

| Time monthly | Number of Btt spores in each version per g tobacco | | | |
|---|---|---|---|---|
| | Control | A | B | C |
| 0 | 0 | $1 \times 10^6$ | $8,8 \times 10^6$ | $1 \times 10^8$ |
| 1 | 0 | $1 \times 10^6$ | $6,4 \times 10^6$ | $2,3 \times 10^8$ |
| 2 | 0 | $9,3 \times 10^5$ | $8,9 \times 10^6$ | $1,3 \times 10^8$ |
| 3 | 0 | $1 \times 10^6$ | $9 \times 10^6$ | $1,1 \times 10^8$ |

The estimates of insects emerging in each version there made by fitting "Serrico" traps at the top of each container, five weeks after egg inoculation. The number of lasioderma serricorne trapped was counted after two weeks; the results are presented in Table 2.

## Table 2

| Sample | Spore equiv./g tobacco | Number of insects trapped | Mortality % |
|---|---|---|---|
| Control | 0 | 222 | 0 |
| A | $10^6$ | 160 | 28 |
| B | $10^7$ | 110 | 50 |
| C | $10^8$ | 42 | 81 |

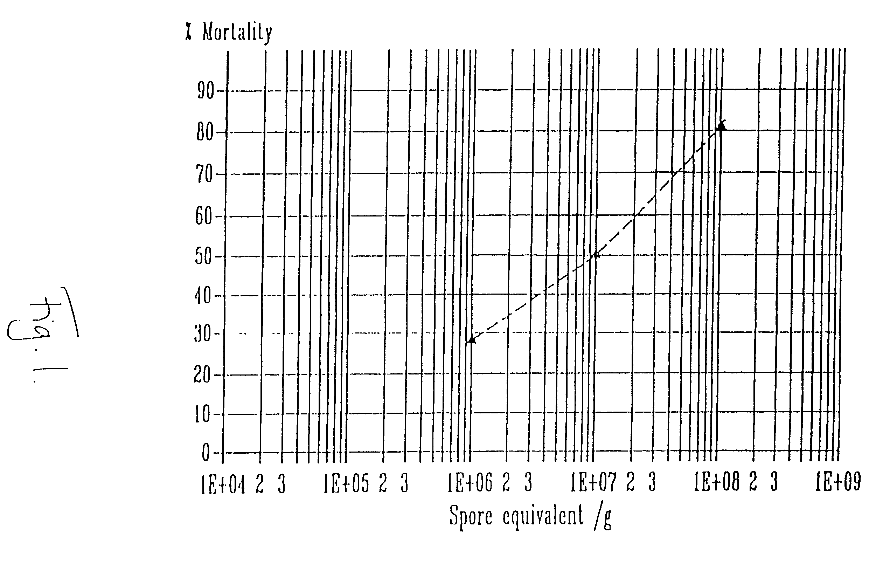

These results are shown graphically in Figure 1.

The LD 50 and LD 90 extrapolated from Fig. 1 are respectively $1 \times 10^7$ and $2 \times 10^8$.

In practice, it will be preferred to apply the spores to the tobacco at about the LD 90 dosage, that is at about $2.10^8$ spores (or spore equivalents)/g of tobacco.

It will normally only be necessary to apply a single treatment of Btt spores to the stored tobacco, which will protect it from infestation with cigarette beetles until it is used, which may not be for 3 years after harvesting.

## Claims

1. A method of controlling the population of Lasioderma serricorne on dried tobacco or other dry material comprising treating the material with Bacillus thuringiensis var. tenebrionis.

2. A method according to claim 1 in which at least some of the Bacillus thuringienis var. tenebrionis is in the spore state.

3. A method according to claim 2 in which the tobacco contains about $10^8$ Bacillus thuringienis var. tenebrionis spores (or spore equivalents)/g of material.,

4. A method according to any preceding claim in which the control is effected by a single treatment with Bacillus thuringienis var. tenebrionis

5. A method according to any preceding claim in which the dried tobacco has a water content of about 10% by weight.

Fig. 1.

| European Patent Office | EUROPEAN SEARCH REPORT | Application Number |
|---|---|---|
| | | EP 91 30 1227 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 149 162 (BOEHRINGER MANNHEIM) * Whole document * & US-A-4 766 203 (Cat. D) & US-A-4 851 340 (Cat. D) --- | 1-5 | A 01 N 63/00 |
| X | ZEITSCHRIFT FÜR ANGEWANDTE ENTOMOLOGIE, vol. 96, 1983, pages 500-508, Hamburg, DE; A. KRIEG et al.: "Bacillus thuringiensis var. tenebrionis: ein neuer, gegenüber Larven von Coleopteren wirksamer Pathotyp" * Whole document * --- | 1-5 | |
| A | EP-A-0 305 275 (PLANT GENETIC SYSTEMS) * Page 2, lines 6-29; page 9, lines 7-28; claim 2 * ----- | 1-5 | |
| | | | TECHNICAL FIELDS SEARCHED (Int. Cl.5) |
| | | | A 01 N |

The present search report has been drawn up for all claims

| Place of search | Date of completion of the search | Examiner |
|---|---|---|
| THE HAGUE | 06-05-1991 | LAMERS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)